Europäisches Patentamt

**European Patent Office**

**Office européen des brevets**

(11) Publication number: **0 310 274 B1**

# EUROPEAN PATENT SPECIFICATION

(45) Date of publication of patent specification: **14.07.93**  (51) Int. Cl.⁵: **G11B 20/10**, H03G 3/20

(21) Application number: **88308642.3**

(22) Date of filing: **19.09.88**

(54) **Digital signal processing apparatus.**

(30) Priority: **29.09.87 JP 245019/87**

(43) Date of publication of application:
**05.04.89 Bulletin 89/14**

(45) Publication of the grant of the patent:
**14.07.93 Bulletin 93/28**

(84) Designated Contracting States:
**DE FR GB NL**

(56) References cited:

**Audio Engineering Society 80th Convention, Montreux, CH, preprint 2315 March 86, New York, USA page 1 - 15; J. A. Jensen: "A New Principle for an all Digital Preamplifier and Equalizer"**

**ELECTRONICS & WIRELESS WORLD. vol. 91, no. 1597, November 85, SUTTON, SURREY, GB page 29 - 33; J. R. Watkinson: "Compact Disc Players-2"**

**FERNSEH UND KINO TECHNIK. vol. 38, no. 12, December 84, BERLIN DE page 547 - 551; H. Zander: "Grundlagen und Verfahren der digitalen Audio-Technik"**

**FUNKSCHAU. vol. 58, no. 22, October 86, MUNCHEN DE page 46 - 50; H-P Siebert: "Bits im Vorverstärker"**

**IEEE Transactions on Circuit Theory 1963, New York, USA page 405 - 413; E. G. Kimme and F. F. Kuo: "Synthesis of Optimal Filters for a Feedback Ouantization System"**

**IEEE COMMUNICATIONS MAGAZINE. vol. 23, no. 2, February 85, New York, USA page 7 - 15; J.B.H. Peek: "Communications Aspects of the Compact Disc Audio System"**

(73) Proprietor: **SONY CORPORATION**
**7-35 Kitashinagawa 6-chome Shinagawa-ku Tokyo 141(JP)**

(72) Inventor: **Ueki, Masaaki**
**c/o Sony Corporation 7-35 Kitashinagawa 6-chome**
**Shinagawa-ku Tokyo(JP)**

(74) Representative: **Ayers, Martyn Lewis Stanley et al**
**J.A. KEMP & CO. 14 South Square Gray's Inn London, WC1R 5EU (GB)**

**Description**

The present invention relates to a level control system, and more particularly to such a system suitable for controlling the volume of a reproduced digital audio signal.

Conventionally, a digital audio apparatus such as a compact disk reproducing apparatus employs a volume controller using a voltage-controlling amplifier (a so-called electronic volume control) for remotely controlling the line out level, that is, the volume of the reproduced audio signal. However, it is difficult to satisfy a predetermined standard level of such a volume control, due to distortion and the like. To cope with this problem, there has been proposed an audio apparatus which is provided with, as the volume control, a variable resistor driven by a motor; the revolution of the motor is remotely controlled thereby to control the volume of the reproduced signal.

However, the above mentioned volume controller using the variable resistor and the driving motor gives rise to problems such as increasing the size of the apparatus, limiting where it can be installed, raising the cost price and so on.

Audio Engineering Society 80th Convention, Montreux, CH, preprint 2315, March 86, New York, USA, page 1-15, J A Jensen: "A New Principle for an all Digital Preamplifier and Equalizer", upon which the preambles of appended claims 1 and 6 are based, discloses a preamplifier for use with a compact disc player in which the gain and phase transfer functions may be varied by means of an FIR filter.

According to the present invention, there is provided a level control apparatus for a PCM signal for controlling the amplitude level of a digitised input signal by digital calculation, comprising:

multiplying means for multiplying data by coefficient data for controlling the amplitude level of said input signal; characterized by

quantizing means for removing a predetermined number of bits of lower significance of data outputted from said multiplying means to thereby generate output data to be converted to an analog signal;

oversampling means supplying said data to said multiplying means employing a high sampling frequency of said input signal; and

feedback means for feeding a quantizing error generated by said quantizing means back to a stage prior to said quantizing means, whereby said output data can be converted to an analog signal while maintaining a predetermined signal quality, even if the amplitude level of said input signal is restricted.

The invention also provides a method of controlling the amplitude of a PCM input signal by digital calculation, comprising the steps of multiplying a digital signal with a digital coefficient for controlling the amplitude representation of a desired output signal, characterized by

quantizing the product produced by the multiplication to produce a quantized digital output in the form of words having few bits than said product,

oversampling said input signal at a frequency which is much higher than the bandwidth of a desired output signal, to produce said digital signal, and

mixing the signal supplied to the input of the quantizer with an error signal developed from said quantized signal, whereby said quantized signal may be converted to an analog signal with a predetermined high signal quality, even when the amplitude representation of said input signal is restricted.

Hence, the present invention aims to solve the previous problems by effecting volume control by signal processing of the digital audio signal. In this system, the incoming data is multiplied by coefficient data representing the required volume setting to derive controlled data which has a bit length longer than that of the original incoming signal data because of the multiplication. However, when supplying the controlled data to a digital-to-analog (D/A) converter to generate the corresponding analog signal, if the number of incoming data bits to the D/A converter is smaller than the bit length of the controlled data, the difference between the two different numbers is cut away, whereby a rounding-off error (quantizing noise) is generated, resulting in deterioration of the quality of the controlled signal data, and the dynamic range becomes narrower.

However, the present invention provides a level control system for a PCM signal which can reduce influences caused by a quantizing noise generated by bit rounding-off errors, which occur when the amplitude level of a signal is restricted in the process of controlling the amplitude level of a digital signal.

Japanese patent publication number 55-28445, US patent number 4467316 and IEEE Transaction of Circuit Theory "Synthesis of Optimal Filters for a Feedback Quantization System", pp 405-413, published in 1963 disclose that rounding-off errors appearing as random noise in the flat frequency spectrum may be fed back through a feedback circuit having an appropriate transfer function to shape the frequency spectrum to thereby suppress the influence due to the quantizing noise. However, this spectrum shaping technique is effective only with an incoming signal having a narrow bandwidth in comparison with the sampling frequency, so that the noise suppression is not so effective when it is applied to a digital audio signal whose sampling frequency fs and bandwidth B are 44.1 kHz and 20 kHz, respectively.

"A Digital Signal Processing Approach to Interpolation", Proceedings of the IEEE, vol 61, No 6, pp 692-710, published in June 1973 and "Interpolative Digital-to-analog Converters", IEEE Transactions on Communications, vol COM-22, No 11, published in November 1974, describes prevention of aliasing noise by making the sampling frequency of an input data signal high.

Further, "Digital-to-analog Conversion in Playing a Compact Disc", Phillips Tech, Rev 40, pp 174-179, 1982, No 6 discloses the application of oversampling and a noise shaper to convert a reproduced signal from a compact disk player to a corresponding analog signal, only by using the suppression of the aliasing noise to suppress the quantizing noise, and does not suggest anything about controlling the level of a reproduced signal by digital calculation.

The present invention will become apparent from the following detailed description of the preferred embodiment taken in conjunction with the accompanying drawings, throughout which like reference numerals designate like elements and parts. In the drawings:-

Figure 1 is a circuit block diagram showing an embodiment of a level control system for a PCM signal according to the present invention;

Figure 2 is a graph showing the noise spectrum of the embodiment of figure 1; and

Figure 3A and 3B are graphs showing spectra used for explaining the operation of the present invention.

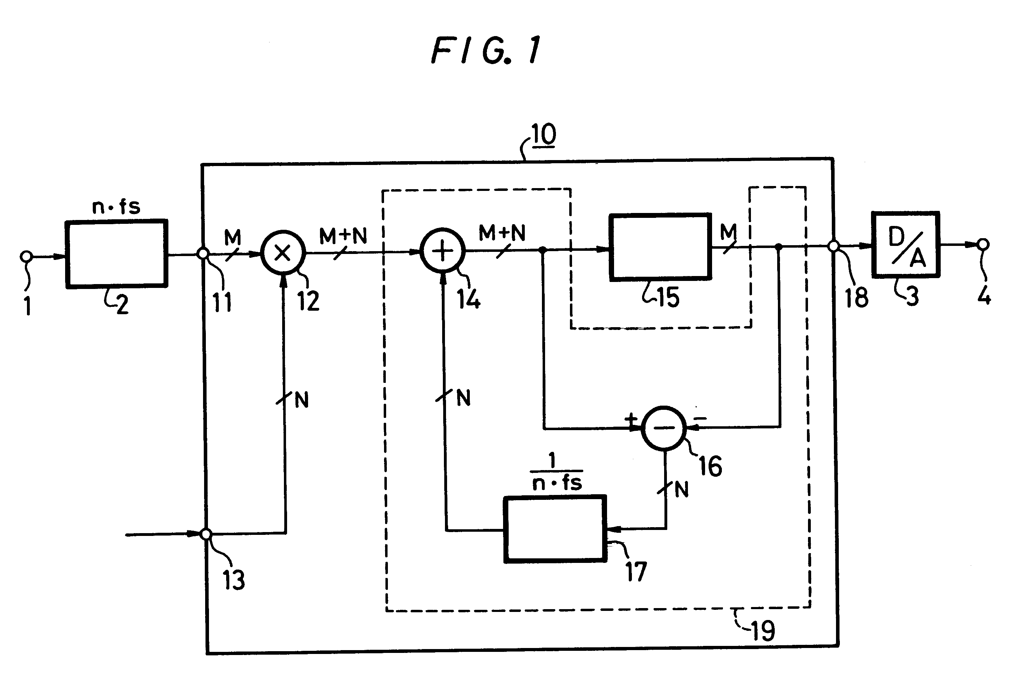

A level control system for a PCM signal of the present invention will be described with reference to figures 1-3.

Figure 1 shows an embodiment of the present invention. Incoming data, whose sampling frequency is fs and whose bit length per word is M (eg, 16) bits, is supplied through an input terminal 1 to a digital filter 2. The digital filter 2 inserts (n-1) samples of interpolation data between data supplied at each sampling period 1/fs to increase the apparent sampling frequency to nfs (n is, for example, 4), thereby effecting n-time oversampling.

A digital signal processing circuit, generally indicated by 10, is supplied with the data from the digital filter 2, whose sampling frequency is nfs and whose bit length per word is M bits, through its input terminal 11 to a multiplier 12 arranged therein. The multiplier 12 is also supplied, through a control input terminal 13, with coefficient data of N (eg, 10) bits for controlling the amplitude of the incoming data. The multiplier 12 outputs a controlled signal data whose bit length is M+N bits. This output from the multiplier 12 is supplied through an adder circuit 14 to a quantizing circuit 15 and difference circuit 16. The quantizing step of the quantizing circuit 15 is set to M bits so that the quantizing circuit 15 outputs controlled signal data of M bits which is supplied to the difference circuit 16. The output from the difference circuit 16 is equal to the difference value between the input and the output of the quantizing circuit 15, that is, a rounding-off error formed of the lower N bits of the controlled signal data which constitutes the quantizing error. The rounding-off error is fed back through a delay circuit (shift register) 17 having a delay time s = 1/(nfs), to the adder circuit 14. In other words, the adder circuit 14, the difference circuit and the delay circuit 17 form a feedback circuit 19 for noise shaping.

The oversampling and controlled signal data of M bits outputted from the quantizing circuit 15 is also supplied through an output terminal 18 to a D/A converter 3 handling M-bit data from which the corresponding analog signal is delivered to an analog output terminal 4.

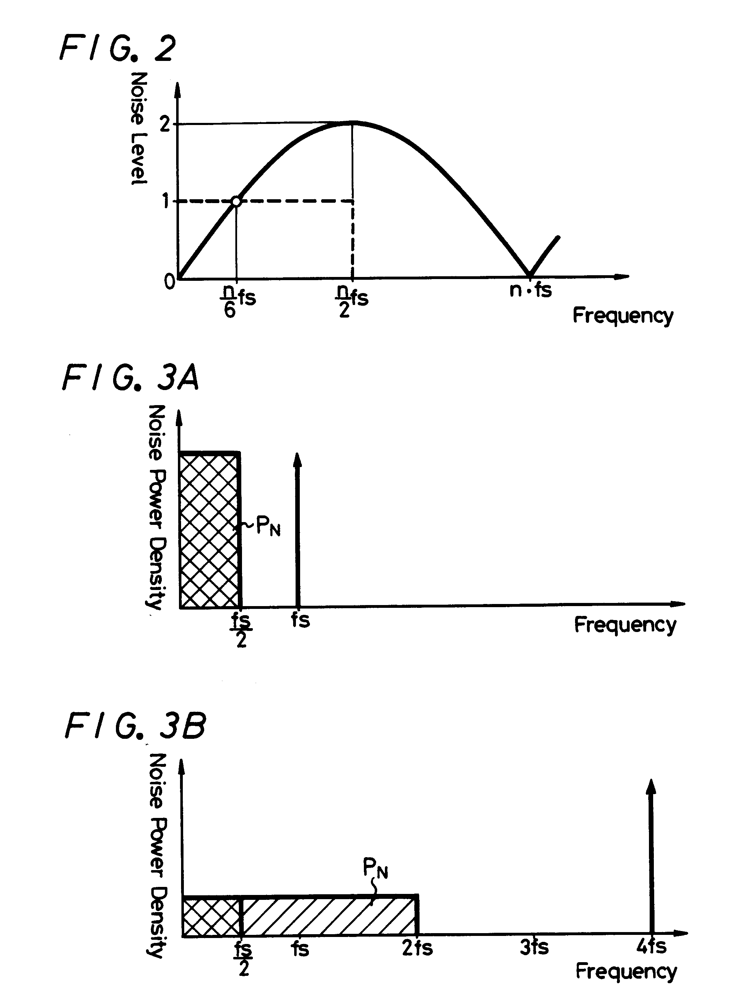

As is disclosed in the aforementioned Japanese patent publication 55-28445, when the shift register 17 provides the unit delay time s = 1/(nfs), the quantizing error or noise from the difference circuit 16 is fed back through the shift register 17, whereby the frequency spectrum of the quantizing error or noise is shaped into a partially sinusoidal curve as indicated by a solid line in figure 2.

The spectrum of quantizing noise without being processed by the feedback circuit shows a flat characteristic as indicated by a broken line in figure 2. It is therefore apparent from figure 2 that although the overall noise level is increased as a result of the noise spectrum shaping, the quantizing noise is largely decreased in a frequency band above nfs/6, at which the solid line and the broken line are crossed with each other.

The improved amount Fsh of the quantizing noise obtained by the noise spectrum shaping is expressed by the following equation (1):

$$Fsh = \sqrt{2\left\{1 - \frac{\sin(2B/nfs)}{2B/nfs}\right\}} \quad \ldots (1)$$

where B represents the signal bandwidth.

In the present embodiment, the data oversampled and processed by a factor of n (eg, four) times in the digital filter 2, is supplied to the multiplier 12 wherein it is subjected to the amplitude control processing.

If the supplied signal is sampled at the sampling frequency fs, a constant noise power density $P_N$ exists in a frequency range up to fs/2 as shown in figure 3A.

On the other hand, in the case of effecting, eg, the 4-time oversampling, the noise power density PN is distributed over a frequency range up to 2fs which is four times wider than the frequency range up to fs/2, as shown in figure 3B. It will be therefore understood that the 4-time oversampling can decrease the noise power density $P_N$ by a factor of four in comparison with sampling at the sampling frequency fs.

Generally, the amount of Fo of noise decreased by n-time oversampling is expressed by the following equation (2);

$$Fo = 10 \log_{10} n \text{ (dB)} \qquad (2)$$

If the multiple n of the oversampling is changed with the signal bandwidth B = 20 kHz and the sampling frequency fs = 44.1 kHz, the improved amount Fo of noise is varied correspondingly as shown in the following table 1.

Table 1

| n | Spectrum shaping (A) | Over-sampling (B) | Total (A + B) |
|---|---|---|---|
| 2 | 2.1 dB | 3 dB | 5.1 dB (0.8 bits) |
| 4 | 7.8 dB | 6 dB | 13.8 dB (2.3 bits) |
| 8 | 13.8 dB | 9 dB | 22.8 dB (3.8 bits) |
| 16 | 19.8 dB | 12 dB | 31.8 dB (5.3 bits) |

For example, in a compact disk reproducing apparatus which employs a 16-bit D/A converter, even through the volume is reduced by 22.8 dB after 8-time oversampling has been effected by a digital filter, since the noise content is improved by 22.8 dB, it is possible to assure a dynamic range of 97.8 dB ( = 6 X 16 + 1.8) which can be achieved with the 16-bit quantization.

Incidentally, when the level control system for a PCM signal of the above embodiment is formed in the same LSI chip as the digital filter 2 for the oversampling, the multiplier 12, the register 17 and so on can be shared with other processes, so that the arrangement can be more simplified.

The above embodiment employs a first-order feedback circuit for the noise spectrum shaping. Alternatively, if a higher-order feedback circuit can be employed, and the improved amount of noise becomes larger.

As described above, the amplitude level of a digitally converted input signal is controlled, by digital calculation, wherein the quantizing noise caused by restricting the amplitude level of input signals can be largely reduced by combining the oversampling means and the signal feedback means for reducing the quantizing noise, with bit reduction, thereby making it possible to maintain a predetermined signal quality.

Specifically, in addition to the reduction of the noise power density in the frequency bandwidth of the input data signal, by making the sampling frequency of the input data signal high, the signal feedback means for reducing the quantizing noise due to the bit reduction is operated such that the noise suppressing effects can be efficiently produced by the oversampling. It is therefore possible to maintain a predetermined signal quality, even when the amplitude level of the input signal is considerably restricted, when the amplitude of the input signal is controlled in the form of a digital signal.

**Claims**

1. A level control apparatus for a PCM signal for controlling the amplitude level of a digitised input signal by digital calculation, comprising:

   multiplying means (12) for multiplying data by coefficient data for controlling the amplitude level of said input signal; characterized by

   quantizing means (15) for removing a predetermined number of bits of lower significance of data outputted from said multiplying means (12) to thereby generate output data to be converted to an analog signal;

oversampling means (2) supplying said data to said multiplying means (12) employing a high sampling frequency of said input signal; and

feedback means (14,16,17) for feeding a quantizing error generated by said quantizing means (15) back to a stage prior to said quantizing means (15), whereby said output data can be converted to an analog signal while maintaining a predetermined signal quality, even if the amplitude level of said input signal is restricted.

2. Apparatus according to claim 1, wherein said oversampling means (2) comprises means for interpolating samples between input samples, to provide an output signal having a sampling frequency which is a multiple of the sampling frequency of the input signal.

3. Apparatus according to claim 1, wherein said feedback means comprises means (16) connected to the input and to the output of said quantizing means (15) for developing a difference signal, means (17) for delaying said difference signal and means (14) for adding the difference signal to the output of said multiplying means.

4. Apparatus according to claim 3, wherein said means (14) for adding comprises an adder having one input connected to the output of said multiplying means (12) and one input connected to receive said delayed difference signal, and an output connected to the input of said quantizing means (15).

5. Apparatus according to any one of the preceding claims, wherein said multiplying means (12) is a digital multiplier having one input connected to receive a digital word of M bits from said oversampling means (2), a second input connected to receive a coefficient word of N bits, whereby a produce word of M + N bits is produced, said quantizing means being operative to reduce the length of the quantized output to M bits.

6. A method of controlling the amplitude of a PCM input signal by digital calculation, comprising the steps of multiplying a digital signal with a digital coefficient for controlling the amplitude representation of a desired output signal, characterized by

quantizing the product produced by the multiplication to produce a quantized digital output in the form of words having fewer bits than said product,

oversampling said input signal at a frequency which is much higher than the bandwidth of a desired output signal, to produce said digital signal, and

mixing the signal supplied to the input of the quantizer with an error signal developed from said quantized signal, whereby said quantized signal may be converted to an analog signal with a predetermined high signal quality, even when the amplitude representation of said input signal is restricted.

**Patentansprüche**

1. Pegelsteuervorrichtung für ein PCM-Signal zur Steuerung des Amplitudenpegels eines digitalisierten Eingangssignals mittels digitaler Berechnung mit

Multiplikationsmittel (12) zum Multiplizieren von Daten mit Koeffizientendaten zum Steuern des Amplitudenpegels des genannten Eingangssignals; gekennzeichnet durch

Quantisierungsmittel (15) zum Entfernen einer vorgegebenen Anzahl von Bits niedriger Bedeutung aus den von den genannten Multiplikationsmittel (12) ausgegebenen Daten, um auf diese Weise in ein analoges Signal umzuwandelnde Ausgangsdaten zu erzeugen;

Oversamplingmittel (2) zum Bereitstellen der genannten Daten für die genannten Multiplikationsmittel (12), wobei eine hohe Abtastfrequenz des genannten Eingangssignals verwendet wird; und

Rückführungsmittel (14, 16, 17) zum Zurückführen eines durch die genannten Quantisierungsmittel (15) erzeugten quantisierten Fehlers zu einer Stufe vor den genannten Quantisierungsmittel (15), wodurch die genannten Ausgangssignale in ein analoges Signal umgewandelt werden können, während eine vorgegebene Signalqualität aufrechterhalten wird, selbst wenn der Amplitudenpegel des genannten Signals begrenzt wird.

2. Vorrichtung nach Anspruch 1, in welcher die genannten Oversamplingmittel (2) Mittel zum Einfügen von Abtastwerten zwischen die Eingangsabtastwerte aufweisen, um ein Ausgangssignal mit einer Abtastfrequenz zu erzeugen, welche ein Vielfaches der Abtastfrequenz des Eingangssignals ist.

3. Vorrichtung nach Anspruch 1, in welcher die genannten Rückführungsmittel Mittel (16), die mit dem Eingang und dem Ausgang der genannten Quantisierungsmittel (15) zum Entwickeln eines Differenzsignals verbunden sind, Mittel (17) zum Verzögern des genannten Differenzsignals und Mittel (14) zum Addieren des Differenzsignals zu dem Ausgangssignal der genannten Multiplikationsmittel aufweisen.

4. Vorrichtung nach Anspruch 3, in welcher die genannten Mittel (14) zum Addieren ein Addierglied mit einem Eingang, der mit dem Ausgang der genannten Multiplikationsmittel (12) verbunden ist, und mit einem angeschlossenen Eingang, um das verzögerte Differenzsignal zu empfangen, und einem Ausgang, der mit dem Eingang der genannten Quantisierungsmittel (15) verbunden ist, aufweisen.

5. Vorrichtung nach einem der vorhergehenden Ansprüche, in welcher die genannten Multiplikationsmittel (12) aus einem digitalen Multiplizierglied mit einem angeschlossenen Eingang, um ein Digitalwort aus M Bits von den genannten Oversamplingmittel (2) zu empfangen, einem zweiten angeschlossenen Eingang, um ein Koeffizientenwort aus N Bits zu empfangen, wodurch ein Wortprodukt aus M + N Bits erzeugt wird, besteht, wobei die genannten Quantisierungsmittel wirksam sind, um die Länge des quantisierten Ausgangssignal auf M Bits zu reduzieren.

6. Verfahren zur Steuerung der Amplitude eines PCM-Eingangssignals mittels digitaler Berechnung mit den Schritten Multiplizieren eines digitalen Signals mit einem digitalen Koeffizienten zur Steuerung der Amplitudendarstellung eines gewünschten Ausgangssignals, gekennzeichnet durch
Quantisieren des durch das Multiplizieren erzeugten Produkts, um ein quantisiertes Ausgangssignal in der Form von Wörtern mit weniger Bits als das genannte Produkt zu erzeugen,
Oversampling des genannten Eingangssignals bei einer Frequenz, welche bedeutend höher als die Bandbreite des gewünschten Ausgangssignals ist, um das genannte digitale Signal zu erzeugen, und
Mischen des dem Eingang des Quantisierers zugeführten Signals mit einem aus dem genannten quantisierten Signal entwickelten Fehlersignal, wodurch das quantisierte Signal in ein analoges Signal mit einer vorgegebenen hohen Signalqualität umgewandelt werden kann, selbst wenn die Amplitudendarstellung des genannten Eingangssignals begrenzt wird.

**Revendications**

1. Appareil de commande de niveau pour un signal modulé par impulsions et codage (MIC) dans le but de commander le niveau d'amplitude d'un signal d'entrée numérisé au moyen d'un calcul numérique, comprenant :
   un moyen de multiplication (12) pour multiplier des données par des données de coefficient pour commander le niveau d'amplitude dudit signal d'entrée,
   caractérisé par :
   un moyen de quantification (15) pour ôter, dudit moyen de multiplication (12), un nombre prédéterminé de bits les moins significatifs des données émises en sortie pour ainsi générer des données de sortie susceptibles d'être converties en un signal analogique ;
   un moyen de sur-échantillonnage (2) qui applique lesdites données audit moyen de multiplication (12) en utilisant une fréquence d'échantillonnage élevée dudit signal d'entrée ; et
   un moyen de retour (14, 16, 17) pour appliquer en retour une erreur de quantification générée par ledit moyen de quantification (15) sur un étage précédent ledit moyen de quantification (15) d'où il résulte que lesdites données de sortie peuvent être converties en un signal analogique tout en maintenant une qualité de signal prédéterminée même si le niveau d'amplitude dudit signal d'entrée est limité.

2. Appareil selon la revendication 1, dans lequel ledit moyen de sur-échantillonnage (2) comprend un moyen pour interpoler des échantillons entre des échantillons d'entrée afin de produire un signal de sortie présentant une fréquence d'échantillonnage qui est un multiple de la fréquence d'échantillonnage du signal d'entrée.

3. Appareil selon la revendication 1, dans lequel ledit moyen de retour comprend un moyen (16) connecté à l'entrée ainsi qu'à la sortie dudit moyen de quantification (15) pour développer un signal de différence, un moyen (17) pour retarder ledit signal de différence et un moyen (14) pour ajouter le signal de différence à la sortie dudit moyen de multiplication.

**4.** Appareil selon la revendication 3, dans lequel ledit moyen (14) d'addition comprend un additionneur comportant une entrée connectée à la sortie dudit moyen de multiplication (12) et une entrée connectée pour recevoir ledit signal de différence retardé, et une sortie connectée à l'entrée dudit moyen de quantification (15).

**5.** Appareil selon l'une quelconque des revendications précédentes, dans lequel ledit moyen de multiplication (12) est un multiplicateur numérique comprenant une entrée connectée pour recevoir un mot numérique de M bits en provenance dudit moyen de sur-échantillonnage (2), une seconde entrée connectée pour recevoir un mot de coefficient de N bits d'où il résulte qu'un mot de produit de M + N bits est produit, ledit moyen de quantification permettant de réduire la longueur de la sortie quantifiée à M bits.

**6.** Procédé de commande de l'amplitude d'un signal d'entrée MIC au moyen d'un calcul numérique, comprenant les étapes de multiplication d'un signal numérique par un coefficient numérique pour commander la représentation d'amplitude d'un signal de sortie souhaité, caractérisé par :

la quantification du produit produit par la multiplication pour produire une sortie numérique quantifiée se présentant sous la forme de mots présentant un nombre de bits inférieur à celui dudit produit ;

le sur-échantillonnage du signal d'entrée à une fréquence qui est de beaucoup supérieure à la largeur de bande d'un signal de sortie souhaité afin de produire ledit signal numérique ; et

le mélange du signal appliqué à l'entrée du quantificateur avec un signal d'erreur développé à partir dudit signal quantifié d'où il résulte que ledit signal quantifié peut être converti en un signal analogique présentant une qualité de signal élevée prédéterminée même lorsque la représentation d'amplitude dudit signal d'entrée est limitée.

# FIG. 1

EP 0 310 274 B1

FIG. 2

FIG. 3A

FIG. 3B